# EUROPEAN PATENT APPLICATION

(11) **EP 1 117 052 A1**
(43) Date of publication of application: **18.07.2001**
(21) Application number: 00610004.4
(22) Date of filing: 17.01.2000
(51) Int. Cl.: G06F 17/60

(54) **Method for providing a transfer of retail goods or retail units**

(71) Applicant: Eilersen, Anders Juul, 5230 Odense M. (DK)
(72) Inventor: Eilersen, Anders Juul, 5230 Odense M. (DK)
(74) Representative: Nielsen, Henrik Sten

(57) **Abstract**

A method for providing a transfer of retail units to a customer comprises the following steps: producing and storing a plurality of retail units at a manufacturer, transporting a display unit of the plurality of retail units to a retail company having a showroom, establishing terms for a leasing agreement between the manufacturer and the retail company, which terms include length of leasing period and leasing instalments per period of time for leasing of the display unit, displaying the display unit for the customer in the showroom, and providing a first offer including a first retail price for a retail unit or alternatively providing a second offer including a second retail price for the display unit. Provided the customer accepts the first offer, the retail unit is then transferred from the manufacturer to the customer or alternatively, provided the customer accepts the second offer, the display unit is transferred from the showroom to the customer. The transfer of the retail unit is conducted by the customer providing a first payment corresponding to the first offer, or alternatively the transfer of the display unit is concluded by the customer providing a second payment corresponding to the second offer. The leasing agreement is continued in case of the transfer of the retail unit from the manufacturer to the customer and the retail company provided a final payment for the retail unit to the manufacturer. Alternatively, the leasing agreement terminates in case of the transfer of the display unit from the retail company to the customer as the retail company provides the final payment for the display unit. The final payment is determined in accordance with transfer of the retail unit of alternatively transfer of the display unit as, in case of transfer of the retail unit, the final payment is constituted by a list price for the retail unit, and as, in case of transfer of the display unit, the final payment is constituted by the list price deducted by an amount equal to a percentage of accumulated leasing instalments.

## Description

The present invention relates to a method for providing a transfer of retail goods or retail units.

Generally, retail goods or retail units such as durable consumer goods or pieces of furniture are delivered from a manufacturer of the retail goods in question such as a furniture maker to a retail company which orders the retail units from the manufacturer and pays the manufacturer for the delivery of the retail units.

The retail company displays the retail units or a single unit representing the retail units to the public or to the customers after receipt of the retail units from the manufacturer for inspiring the customers to purchase the retail unit displayed or a retail unit corresponding to the retail unit or units displayed, however specifically complying with the customers' requirements. As the customer orders the specific product to be delivered by the retail company, the retail company delivers the retail unit in question from its stock containing the retail units or orders the specific retail unit from the manufacturer for the delivery of the specific retail unit to the retail company after purchase of the product in question from the manufacturer.

The customer then receives the retail product ordered from the retail company after the purchase of the specific product from the manufacturer and pays for the retail unit delivered. In some instances, the manufacturer after receiving payment from the retail company delivers the retail unit at the home address of the customer according to a specific agreement between the retail company and the manufacturer and after the confirmation by the retail company of proper ordering and payment of the retail unit by the customer and correspondingly correct and proper ordering and payment for the delivery of the specific product from the manufacturer to the customer.

In European patent application No. 0 696 004, the above described technique of supplying and transferring retail units from a manufacturer to a retail company and in the inverse direction and in parallel with the delivery of the retail units, the payment for the retail goods by the retail company to the manufacturer and the purchase and payment by the customer to the retail company is described. Although the above described technique of handling the transfer of retail goods from the manufacturer through the retail company to the customers and the arrangement of payment in the adverse direction has been utilised for decades or even centuries and although the technique is truly fairly complex and by no means adapted to the swiftness of electronic purchasing of goods including the payment for goods by arrangement of transfer or payment by means of credit cards, through internet payments and internet ordering etc., the retail companies and manufacturers of products of the relevant kind have to very little extent modified or modernised the technique of handling the goods and the technique of transferring the goods in combination with the arrangement or payment for the transfer or delivery of the goods.

It is an object of the present invention to provide a novel technique and in particular a novel method allowing for a more swift and adequate transfer of the retail goods along the line from the manufacturer to the customer and arrange for a swift and comprehensive payment for the delivery without inadequate delay of the delivery and at the same time allow for alternative ways of transferring the goods and arrange for swift and comprehensive payment for the goods.

A particular advantage of the present invention relates to the fact that the method for providing a transfer of retail units to a customer according to the teachings of the present invention allows the retail company to obtain a variety of display units for a modest investment and at the same time allow for the sale of the display units or alternative corresponding units to be delivered by the manufacturer to the customer or delivered from the retail company's stock or alternatively delivered from the manufacturer to the retail company for further delivery from the retail company to the customer.

A particular feature of the present invention relates to the fact that the method according to the present invention offers control and surveillance of transfer of retail units from a manufacturer or a plurality of manufacturers to a customer or a plurality of customers and in particular allows the manufacturer and/or the retail company to control in accordance with a control scheme or control method the transfer or retail units from the manufacturer to the customer or customers.

The object, the above advantage and the above feature together with numerous other objects, advantages and features characteristic of the present invention are obtained according to the teachings of the present invention by a method for providing a transfer of retail units to a customer and comprising the following steps:
(a) producing a plurality of retail units at a manufacturer,
(b) storing the plurality of retail units at the manufacturer,
(c) transporting a display unit of the plurality of retail units to a retail company having a showroom,
(d) establishing terms for a leasing agreement between the manufacturer and the retail company, the terms including length of leasing period and leasing instalments per period of time for leasing of the display unit,
(e) displaying the display unit for the customer in the showroom,
(f) providing a first offer including a first retail price for a retail unit of the plurality of retail units or alternatively providing a second offer including a second retail price for the display unit from the retail company to the customer,
(g) provided the customer accepts the first offer, transferring the retail unit from the manufacturer to the customer or alternatively, provided the customer accepts the second offer, transferring the display unit from the showroom at the retail company to the customer,
(h) concluding the transfer of the retail unit from the manufacturer to the customer by the customer providing a first payment corresponding to the first offer or alternatively concluding the transfer of the display unit from the retail company to the customer by the customer providing a second payment corresponding to the second offer,
(i) continuing the leasing agreement in case of the transfer of the retail unit from the manufacturer to the customer and the retail company providing a final payment for the retail unit to the manufacturer, or alternatively terminating the leasing agreement in case of the transfer of the display unit from the retail company to the customer and the retail company providing the final payment for the display unit, and
(j) determining the final payment in accordance with transfer of the retail unit or alternatively transfer of the display unit, in case of transfer of the retail unit the final payment being constituted by a list price for the retail unit, in case of transfer of the display unit the final payment being constituted by the list price deducted by an amount equal to a percentage of accumulated leasing instalments,
so as to provide an environment having optimal storage of retail units by concentrating storage capabilities at the manufacturer and having reduced transportation expenses of the retail goods by directly providing the retail goods from the manufacturer to the customer or alternatively from the retail company to the customer.

In the present application, the terms used such as the terms manufacturer, retail company, showroom, customer, retail goods, retail units and products are to be understood and construed as generic terms. In particular, the term or expression retail goods, retail units, retail products or in general goods, units or products are to be construed synonymous terms representing a specific entity or merchandise, product, article etc. which is produced and sold to a customer or consumer. Further the term manufacturer is to be construed a generic term representing in the first place the organisation or individual producing a specific article, product etc., vide above, however the term or expression manufacturer is also to be construed including a specific organisation, company or individual such as an importer, an importing company, a distributor or distributing company, a wholesale dealer or a wholesale company etc. which company or individual represents a link in the chain of distributing products from the manufacturer being the original producer of the piece of product in question to the retail company. Further, the retail company is to be construed a generic term representing a conventional shop, a supermarket, a shopping centre or a wholesale society as the retail company is to be understood being the organisation or company in which the product in question along with a number of similar or different products are presented to the final user, customer or consumer, vide below, and in which company or organisation the final user determines whichever product among a variety of products is to be purchased for the intentional final use. Still further, the term or expression "customer" is to be construed a generic term representing in the first place an individual being the final user, the customer or consumer or alternatively, a company or organisation purchasing for use within the organisation or company the product presented to the company or organisation or to a representative of the company or organisation at the premises of the retail company. The term or expression "list price" is also to be construed a generic term representing firstly a price present in a list of prices covering a variety of equivalent or different products such as products delivered by the manufacturer to the retail company and secondly a price which has been accepted by the retail company in writing or simply accepted as a proposal for the price to be paid by the retail company to the manufacurer for the purchase of the product or retail unit in question. Consequently, the expression "list price" defines any price determined or set by the manufacturer as defined above and accepted or agreed by the retail company further as defined above. Finally, the word or expression showroom of the retail company is to be understood as a generic term representing and describing a location such as a conventional showroom for displaying and exhibiting products to consumers, but rather to be considered defining in general the premises being a specific location or a dedicated room and in which the product or products in question are displayed or simply presented to consumers.

According to the teaching of the present invention, the transfer of retail units and the optimal storage of retail units is obtained through the leasing of the display unit by the retail company from the manufacturer and the alternative possibilities of arranging for the payment to the manufacturer by in the one instance, transferring the list price to the manufacturer provided the retail unit to be purchased by the customer is delivered from the manufacturer to the customer or alternatively provided the display unit is to be purchased by the customer by the transfer of the list price deduced by an amount equal to a percentage of the accumulated leasing instalments. The novel method according to the present invention allows the retail company to obtain a diversity of retail units for displaying to the customers and also allows the retail company to terminate the licensing agreement by the sale of the display unit to the customer.

It is furthermore to be realised that the method according to the present invention provides an improvement as to be utilisation of the logistics as far as transfer of retail units or retail goods are concerned and an improvement as to the swiftness and simplicity of ordering and arranging for payment or transferring of payment between the retail company and the manufacturer and further advantages as to financial aspects to the retail company and also the manufacturer. It is to be realised that the provision of a leasing agreement between the manufacturer and the retail company allows the retail company to obtain a larger variety of display units by establishing leasing agreements with the manufacturer covering a larger variety of display units as compared to the prior art financing technique involving the payment of the list price by the retail company to the manufacturer before the displaying of the display unit in the showroom of the retail company. From the point of view of the manufacturer, improved utilisation of the transport or transfer structure provides advantages as compared to the prior art technique of distributing retail units and further through the provision of the leasing agreement with the retail company allows the manufacturer to present a larger variety of products in the showroom of the retail company and thereby presenting a larger variety of products to the customer as compared to the previous technique involving the payment of the retail units to be displayed in the showroom of the retail company.

It is contemplated that the method according to the present invention allows for the utilisation of a novel leasing technique and further an improved transfer set-up as compared to the prior art method of transferring retail goods to a customer and allows the utilisation of modern payment system and ordering systems involving internet ordering, internet payment and payment by means of credit card organisations, credit card bank account transfer systems etc. In this context, the above described advantages as to the swiftness and the utilisation of the transfer system for transferring retail goods to a customer is to a high degree compatible with the modern computerised ordering and payment techniques described above.

Dependent on the actual type of retail goods or retail units to be transferred according to the teachings of the present invention, the period of time for leasing the display unit to be displayed in the showroom of the retail company may vary from a fairly short period of time provided the retail unit is of a kind or type providing a high velocity of circulation or high rate of turn-over or alternatively provided the retail unit is a kind of goods the sale of which is dependent on the seasons of the year. According to the teachings of the present invention, the period of time established in step (d) may constitute one hour, a fraction of an hour, one day, a fraction of a day, one week, a part of a week, a month, a part of a month, a year or a part of a year. The period of time may further according to the teachings of the present invention constitute a constant entity such as a period of one month or may alternative constitute a period of time which varies during the seasons of the year, in particular provided the sale of the retail unit in question is dependent on the season of the year such as dependent on the weather being a summer article or an winter article, an article predominantly sold during one of the festival periods of the year, such as prior to the Christmas period. Further, according to the teachings of the present invention, the period of time established in step (d) may provided the period of time varies is a non-constant entity, vary as a decreasing or increasing function of the previous leasing period or constitute any other functional relationship to any relevant property such as the lifetime of the retail unit, the age of the specific model of the retail unit.

Still further, according to the teachings of the present invention, the length of leasing period established in step (d) may constitute a fixed period of time independent of the above discussed period of time established in step (d) or may alternatively and advantageously constitute a multiplicity of the period of time such as or a fixed length such as one day, one week, one month, one year or a multiplicity of days, weeks, months or years. Furthermore, the length of the leasing period may dependent on the type of retail unit like the period of time established in step (d) vary as discussed above or constitute a season dependent function or a decreasing or increasing function as discussed above.

In accordance with the method according to the present invention, the leasing instalment established in step (d) may dependent on the kind or type of retail units covered by the leasing agreement between the manufacturer and the retail company constitute a fixed amount or fixed entity or constitute an amount or entity which may as discussed above in relation to the period of time established in step (d) for which the leasing instalment is to be paid vary during the season of the year or may constitute an amount which varies as a function being a decreasing or increasing function of the previous leasing period the lifetime of the retail unit or any other property or entity etc.

Dependent on the type of retail units covered by the licensing agreement further the lifetime of the retail units in question and the above discussed period of time for which the leasing instalment is to be paid, the total leasing period and further the leasing instalment, the percentage determined in step (e) which percentage is used for deducting from the list price in the calculation of the amount to be paid by the retail company to the manufacturer provided the display unit is sold to a customer, may constitute a varying percentage depending on e.g. the seasons of the year, the expected lifetime of the retail unit in question etc. The percentage may according to the teachings of the present invention be of the order of 1-10%, 10-20%, 20-30%, 30-40%, 40-50%, 50-60%, 60-70%, 70-80%, 80-90% or 90-100% or alternatively a percentage within the range 30-90%, 50-80% such as 60-75% or preferably 70%.

As discussed above, the method according to the present invention of transferring retail units to a customer may be utilised within numerous technical fields in relation to low rate of velocity or low rate of turn-over products or alternatively high rate of circulation or high rate of turn-over articles or products. It is, however, contemplated that the technique and method according to the present invention are particular relevant in connection with fairly high-priced products, products which call for serious investigations by the customer prior to the purchase of the product, and further products which usually exhibit a fairly long or extended lifetime such as furniture, durable consumer goods etc.

According to a particular aspect of the present invention, the method is related to the furniture manufacturing and distribution field and the manufacturer consequently preferably and advantageously is a furniture manufacturer or furniture maker and the retail unit consequently further advantageously and preferably is a furniture retail shop or company whereas the retail units including the display unit are pieces of furniture of any relevant kind or type or constitutes a variety of types including tables, chairs, sofas, beds etc.

Further as stated above, the retail units may constitute durable consumer goods such as cars, television sets, hi-fi equipment, computers, household appliances etc. in which case the manufacturer is a manufacturer of the specific type of durable consumer goods and the retail company constitutes a retail shop selling durable consumer goods of the relevant type.

As far as fairly expensive furniture and fairly expensive durable consumer goods are concerned, it is believed that the customer in most instances spends some time for considering a variety of competing products, e.g. by utilisation of the internet and then specifically examines and investigates a few types of relevant products which are carefully examined in some cases even several times before the customer decides whichever product to purchase. After a decision has been made, the customer expects to obtain a swift and expedite receipt of the retail unit purchased which as discussed above calls for the expedite and swift transfer technique according to the present invention allowing the retail company to readily deliver the display unit or alternatively arrange for the delivery from the manufacturer or through the stock of the retail company of a specific dedicated variant or type of retail unit purchased by the customer in question.

The price to be calculated by the retail company, which price is to be paid by the customer may of course be dependent on the type of retail unit or units or retail goods in question, in numerous different ways taking into consideration the above aspects relating to the actual life time or expected life time of the unit or product in question, the rate of circulation or rate of turn-over of the product in question or any seasonal relations of the product or retail unit in question. Generally, the retail prices being the first and second retail prices established in step (f) are determined equal to the sum of the list price, a first profit earned by the retail company and any tax such as value added tax, environmental tax etc. and the sum of the list price, a second profit earned by the retail company and any tax, respectively. The first and second retail prices may of course also be subject to deduction rates or any other variations dependent on the customer in question or the seasons of the year etc. In particular, the first and second retail prices may as discussed above constitute a decreasing or an increasing function of the previous leasing period, the period of displaying the unit in the showroom, the expected life time of the unit or product in question etc.

Dependent on the actual kind of unit or product to be delivered to the customer and further dependent on from which source the unit being the display unit presented to the customer in the showroom of the retail shop or being a retail unit delivered from the manufacturer or alternatively delivered from a stock of the retail company, the transportation of the display of or retail unit in step (c) involves the packing of the display or retail unit into a sealing package or transportation unit and the displaying of the display or retail unit in step (e) involves unpacking of the display or retail unit from the package or transportation unit.

The invention is now to be further described with reference to the drawings in which

Figs. 1a and 1b are schematic views of a presently preferred embodiment of the method of transferring goods to a customer and in greater details illustrate the transfer of goods between a manufacturer, a retail company and a customer and the payment between the customer, the retail company and the manufacturer, and

Fig. 2 is a block diagrammatic view illustrating a scheme of decisions of how to operate the method of transferring goods.

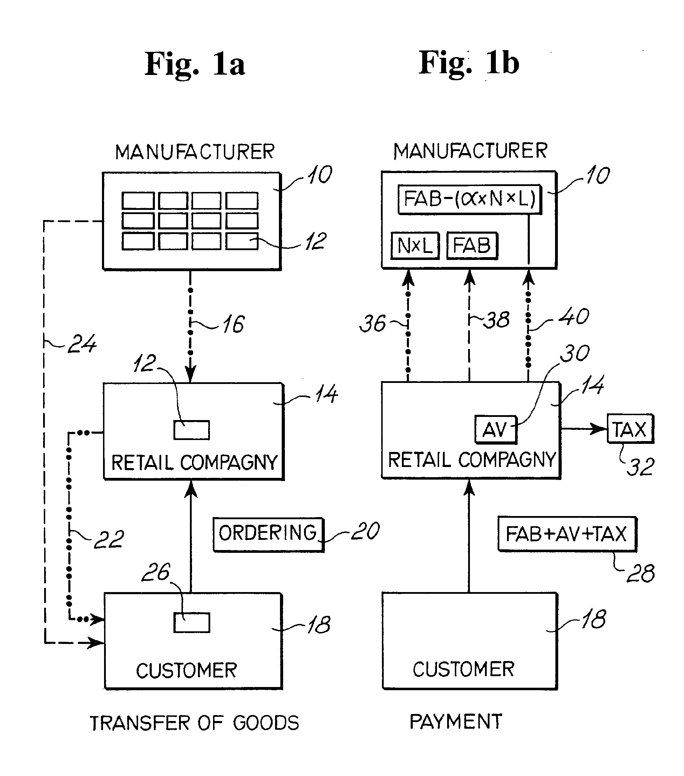

In figs. 1a and 1b, a presently preferred embodiment of a method according to the present invention of transferring retail products, retail goods or retail units to a customer and of arranging for the payment of the goods is shown. In fig. 1a, a block 10 represents a manufacturing plant producing a single or a variety of products such as pieces of furniture or similar products, e.g. sofas, beds, tables etc. The reference numeral 12 indicates a specific piece of product such as a sofa which is present in a multiplicity at the premises of the manufacturer as represented by the block 10 enclosing the multiplicity of products 12. The manufacturer supplies and delivers the products to a retail company which company is represented by a block 14. The supply of products from the manufacturer 10 to the retail company 14 is indicated by a line 16 which is presented in the signature of line-dot and which represents according to the preferred embodiment of the method according to the present invention the supply of a single piece of product or retail unit from the manufacturer to the retail company which single product is used by the retail company for presentation in a showroom of the retail company for displaying the product to customers. As will be understood, the supply and transfer of a single piece of product of retail goods or a single piece of retail unit from the manufacturer 10 to the retail company 14 involves a minimum involvement into transportation and utilisation of storage capacity of the retail company and further as will be understood from the below detailed description of the system of payment and financing the transfer of goods further involves a minimum economical involvement since the single product delivered from the manufacturer 10 to the retail company 14 is delivered in accordance with a leasing agreement between the manufacturer of the retail company.

The leasing agreement between the manufacturer 10 and the retail company 14 defines in accordance with well-known leasing principles per se the length of the leasing period, a period of time for which a leasing instalment is to be paid and further any other conditions such as reduced instalments after a specific duration of the leasing period, seasonal variations etc. Provided the product 12 is a piece of furniture, such as a sofa, the leasing agreement normally involves the simple determination of the maximum leasing period, the period of time for which leasing instalment is to be paid and also the leasing instalments. The maximum leasing period may constitute a multiplicity of the individual periods of time for which instalments are to be paid, such as a number of months, e.g. 12 or 24 months, as a leasing instalment is to be paid for each month. Conventionally, the leasing instalment may constitute a percentage of the list price for which the retail company may purchase the furniture or other piece of goods which percentage is determined in accordance with normal and well-known financing principles per se as a fraction of the accumulated price spit into a number of rates corresponding to the number of periods of time for which the leasing agreement may last.

In the showroom of the retail company 14, the single piece of goods such as a single piece of furniture is displayed to the customers for allowing the customers to evaluate the product in question and from the retailer's point of view decide to purchase the product. It is to be understood that the present matter may involve the agreement of the supply of at least one display unit from the manufacturer 10 to the retail company 14, still provided a variety of products is to be displayed by the retail company, the present method including the leasing agreement, may cover a variety or in other words a number of pieces of goods such as furniture delivered in accordance with the leasing agreement from the manufacturer 10 to the retail company 14. For the sake of simplicity and clarity, however, the present discussion involves the simple set-up involving a single display unit rather than a variety of units or pieces of goods delivered from the manufacturer 10 to the retail company 14 rather than a complex delivery and presentation of several variants of a specific piece of product within the showroom of the retail company 14.

In fig. 1a, a block 18 represents a customer or consumer who becomes interested in the product 14 presented to the customer in the showroom of the retail company 14. The customer 18 may have analysed the market situation e.g. through searches on the internet, by obtaining brochures from several retail companies having different products of a specific type such as a specific type of furniture, e.g. a sofa of different designs and different origin, such as supplied from different manufacturers. Provided the customer 18 decides to purchase the type of product represented by the reference numeral 12, the customer 18 orders the delivery of the product from the retail company 14. The ordering of the product is indicated by the reference numeral 20 referring to a block illustrated in fig. 1a. The customer may order the specific product to which the customer has been presented in a showroom. In this instance, the product delivered to the customer, which product is designated the reference numeral 26 in fig. 1a, is delivered along a route of transfer indicated by the reference numeral 22, which route of transfer is indicated by the signature line-dot-dot. Alternatively, the customer may decide to purchase a product identical to the product presented to the customer in the showroom of the retail company 14, however to be delivered from the manufacturer 10 as indicated by a route of transfer designated the reference numeral 24 in fig. 1a, which route of transfer single-dotted line. Provided the product 26 is delivered to the customer 18 from the manufacturer 10 along the route of transfer 24, the retail company continues displaying the display unit 12 at the premises or the showroom of the retail company 14 and continues paying leasing instalments to the manufacturer 10 according to the above described leasing agreement. Alternatively, provided the product 26 delivered to the customer is delivered along the route of transfer 22, i.e. the product 26 delivered to the customer being identical to the product presented to and displayed to the customer in the showroom of the retail company 14, the leasing agreement between the manufacturer 10 and the retail company 14 covering the specific product now sold to the customer 18 is terminated.

In fig. 1b, the routes of arranging payments and the various payment figures is illustrated. In fig. 1b, the customer 18 pays for the delivery of the product 26 by paying a price indicated by the reference numeral 28 which price is calculated on the basis of mainly three constituents, namely FAB being the list price to be paid to the manufacturer by the retail company for the purchase of the kind of product delivered, AB being the profit earned by the retail company and TAX being any taxes to be paid such as VAT, environmental tax or any other tax or fee to be paid by the retail company after finalising the sale of the product 26 to the customer 18.

The routes of payment from the retail company 14 to the manufacturer 10 involves firstly the payment of leasing instalments as indicated along a line 36 having the same signature as the line 16 and resulting in the payment of a number of leasing instalments as indicated within the box 18 by the signature NxL. The payment of the leasing instalments as indicated by the line 36 is continued until the display unit or display product 12 is sold by the retail company 14 to the customer 18 or alternatively, until the leasing agreement is terminated by one of the parties of the agreement or simply expires. Provided the product 26 delivered to the customer constitutes a product delivered along the line of transfer 24, the retail company 14 pays the list price as indicated by the line of transfer of payment designated the reference numeral 38 and having the same signature as the route of transfer 24. The payment of the list price results in the payment of the amount or figure FAB defined above. Alternatively, provided the retail company 14 delivers the display product or unit 12 presented to the customer in the showroom of the retail company 14 to the customer 18, the leasing agreement between the manufacturer and the retail company is terminated and the payment from the retail company 14 to 'the manufacturer 10 is carried out along a line 40 designated the same signature as the route of transfer 22 and involves the payment of a figure FAB - (axNxL) which figure constitutes a price originating from the list price FAB still reduced by a factor a which factor is less than 1, i.e. constitutes a percentage of the order of 50-90%, such as a percentrage of the order of 60-80%, e.g. 70%, by which figure the previously paid leasing fees are deducted from the price to be paid by the retail company 14 to the manufacturer 10. Provided the above described transfer system and payment system be implemented, the manufacturer 10 and the retail company 14 after the termination of the leasing agreement covering the display product 12 is presumably and advantageously renewed in relation to a new display unit or display product which is delivered by the manufacturer 10 along the route 16, presented and displayed in the display room or showroom of the retail company 14 and later on as one of the two sales alternatives sold to the customer by the retail company 14 after the presentation and displaying of the product to the customer.

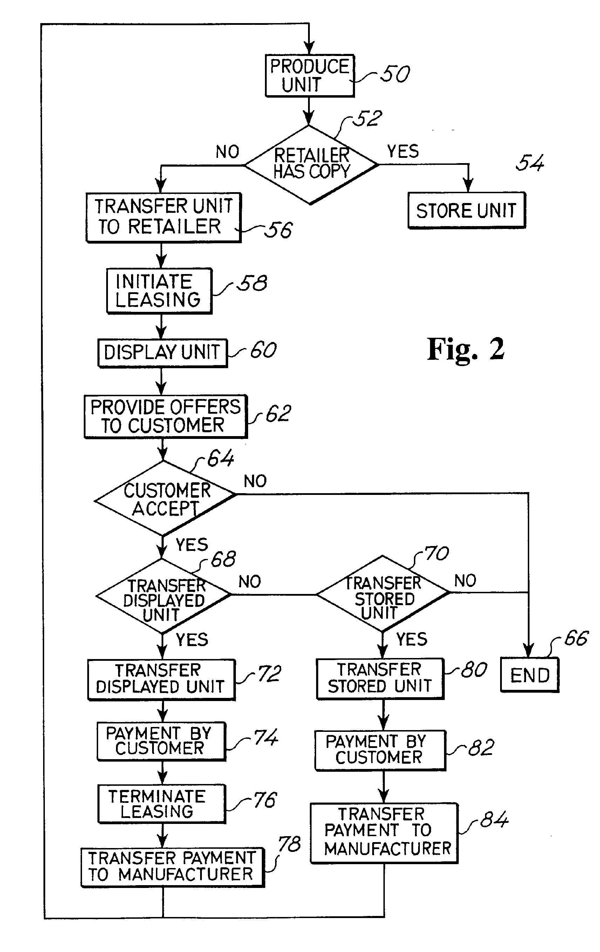

In fig. 2, a flow chart of the operation of the method of transferring retail goods or retail units from a manufacturer through a retail company to a customer is illustrated. In block 50, a unit such as a piece of further or any other product is produced and after the production of the retail unit, the question is raised in block 52 whether or not the retail company has a copy of the product which copy constitutes a display unit to be displayed in the showroom of the retail company as discussed above with reference to fig. 1a. Provided the retail company already is in possession of a copy, the answer is yes, and the program continues to block 54 and the unit is stored. Provided the answer to the question raised in block 52 is no, the program goes to block 56 and the unit in question is transferred to the retailer company and in block 58, the leasing agreement discussed above with reference to fig. 1a is initiated. After the transfer of the display unit from the manufacturer according to block 56 and after the initiation of the leasing agreement according to block 58, the unit is displayed in the showroom of the retail company as stated in block 60. After the displaying of the display unit in the showroom of the retail company, customers are presented to offers for purchasing the copy being the display unit or a similar product or unit to be delivered from the manufacturer, e.g. a product which is identical to the product displayed in the showroom of the retail company or alternatively a product which has been slightly modified e.g. provided the product is a sofa, by substituting the textile of the sofa or amending the colour of the textile of the sofa as compared to the colour of the textile of the sofa to the customer in the showroom. The offers presented to the customer may include a first offer representing the sale of the specific product displayed in the showroom in which instance the delivery of the product is carried out in accordance with the route of transfer 22 illustrated in fig. 1a and in which case the payment from the retail company to the manufacturer is established in accordance with the line of payment 40 illustrated in fig. 1b. A second offer may relate to the delivery of a modified product, e.g. a sofa having a different type of textile or a different colouring etc. and the offer involves the delivery of the specific product from the manufacturer to the customer along the route of transfer 24 illustrated in fig. 1a and involves the payment from the retail company to the manufacturer along the line 38 illustrated in fig. 1b.

In block 64, the program decides whether or not the customer accepts any of the offers presented by the retail company, and provided the answer to the question is no, the customer not accepting any offers, the program continues to the end block 66. Provided the answer to the question is yes in which instance the customer accepts one of the offers, the program continues to a block 68, in which a decision is made whether or not to transfer the display unit, or provided the answer is no, transferring the stored unit from the manufacturer as indicated in block 70. From the block 68, the program continues provided the answer to the question is yes to a block 72 in which the displayed unit is transferred to the customer and the customer arranges in block 74 for the payment to the retail company e.g. in cash or by arranging for the payment by a credit card organisation or bank transfer. As the displayed unit has been purchased by the customer, the license agreement is terminated in block 76 of the program, and the payment from the retail company to the manufacturer is in block 78 established in accordance with the line of payment 40 indicated in fig. 1b and discussed above with reference to fig. 1b. The payment from the retail company to the manufacturer constitutes the payment of the list price for the product sold deducted by a percentage of the previously paid accumulated leasing fees. From block 78, the program returns to the block 50 and starts up by the initial block of producing a unit. Provided the answer to the question raised in block 58 is no, the program has to decide to transfer the stored unit according to block 54 unless the answer to the question is no in which instance the program goes to the end block 66. From block 70, the program continues, provided the answer to the transfer stored unit question be yes to a block 80 in which the stored unit is transferred from the manufacturer 10 to the customer along the route of transfer 24 indicated in fig. 1a, and the customer arranges in block 82 for the payment to the retail company, whereupon the retail company arranges for the transfer or payment to the manufacturer along the line 38 illustrated in fig. 1b, whereupon the program returns to block 50 for producing a unit and for storing the produced unit in block 54 whereby substituting the unit of the stock which unit was transferred to the customer in block 80.

It is to be understood that the method of transferring retail goods or retail units such as durable consumer goods according to the above description of a presently preferred embodiment of the method according to the present invention allows for a more adequate utilisation of the logistics of the manufacturer and also the retail company and reduces the lines of transfer as compared to a conventional technique of delivery of goods from the manufacturer to the retail company, storing the goods by the retail company and retransferring from the stock of the retail company the product purchased by the customer. Further the method according to the present invention is contemplated to provide financial advantages as the presentation of the multiplicity of products is possible based on a leasing agreement between the manufacturer and the retail company which leasing agreement or leasing agreements reduces the up-front investments to be made by the retail company for allowing the retail company to present a variety of products to customers.

## Claims

1. A method for providing a transfer of retail units to a customer and comprising the following steps:
(a) producing a plurality of retail units at a manufacturer,
(b) storing said plurality of retail units at said manufacturer,
(c) transporting a display unit of said plurality of retail units to a retail company having a showroom,
(d) establishing terms for a leasing agreement between said manufacturer and said retail company, said terms including length of leasing period and leasing instalments per period of time for leasing of said display unit,
(e) displaying said display unit for said customer in said showroom,
(f) providing a first offer including a first retail price for a retail unit of said plurality of retail units or alternatively providing a second offer including a second retail price for said display unit from said retail company to said customer,
(g) provided said customer accepts said first offer, transferring said retail unit from said manufacturer to said customer or alternatively, provided said customer accepts said second offer, transferring said display unit from said showroom at said retail company to said customer,
(h) concluding said transfer of said retail unit from said manufacturer to said customer by said customer providing a first payment corresponding to said first offer or alternatively concluding said transfer of said display unit from said retail company to said customer by said customer providing a second payment corresponding to said second offer,
(i) continuing said leasing agreement in case of said transfer of said retail unit from said manufacturer to said customer and said retail company providing a final payment for said retail unit to said manufacturer, or alternatively terminating said leasing agreement in case of said transfer of said display unit from said retail company to said customer and said retail company providing said final payment for said display unit, and
(j) determining said final payment in accordance with transfer of said retail unit or alternatively transfer of said display unit, in case of transfer of said retail unit said final payment being constituted by a list price for said retail unit, in case of transfer of said display unit said final payment being constituted by said list price deducted by an amount equal to a percentage of accumulated leasing instalments,
so as to provide an environment having optimal storage of retail units by concentrating storage capabilities at said manufacturer and having reduced transportation expenses of said retail goods by directly providing said retail goods from said manufacturer to said customer or alternatively from said retail company to said customer.

2. The method according to claim 1, said period of time established in step (d) constituting one hour, a fraction of an hour, one day, a fraction of a day, one week, a part of a week, a month, a part of a month, a year or a part of a year or constituting a period of time which varies during the seasons of the year or varies as a decreasing or increasing function of the previous leasing period, and/or said length of leasing period established in step (d) constituting a multiplicity of said period of time or a fixed length such as one day, one week, one month, one year or a multiplicity of days, weeks, months or years.

3. The method according to any of the claims 1 or 2, said leasing instalment established in step (d) constituting a fixed amount, constitutes an amount which varies during the season of the year or constitutes an amount which varies as a function being a decreasing or increasing function of the previous leasing period.

4. The method according to any of the claims 1-3, said percentage determined in step (j) constituting a percentage of the order of 1-10%, 10-20%, 20-30%, 30-40%, 40-50%, 50-60%, 60-70%, 70-80%, 80-90% or 90-100% or alternatively a percentage within the range 30-90%, 50-80% such as 60-75% or preferably 70%.

5. The method according to claim 4, said percentage constituting a fixed percentage or constitutes a percentage varying during the seasons of the year or alternatively varies as a function being a decreasing or increasing function of the previous leasing period.

6. The method according to any of the previous claims 1-5, said manufacturer being a furniture manufacturer or furniture maker and said retail unit being pieces of furniture of a specific kind or of a variety of types including tables, chairs, sofas, beds etc.

7. The method according to any of the claims 1-5, said manufacturer being the manufacturer of durable consumer goods such as cars, television sets, hi-fi equipment, computers, household appliances, etc.

8. The method according to any of the preceding claims, said first and second retail prices established in step (f) being equal to the sum of said list price, a first profit earned by said retail company and any tax such as value added tax, environmental tax etc. and the sum of said list price, a second profit earned by said retail company and any tax, respectively.

9. The method according to claim 8, said first and/or said second retail price being a constant price or a price varying as a function of the seasons of the year or constitutes a decreasing or an increasing function of the previous leasing period, or the period of displaying said unit in said showroom.

10. The method according to any of the claims 1-9, said transporting of said display or retail unit in step (c) involving the packing of the display or retail unit into a sealing package or transportation unit and said displaying of said display or retail unit in step (e) involving unpacking said display or retail unit from said package or transportation unit.
